# EUROPEAN PATENT APPLICATION

(11) **EP 1 267 230 A2**
(43) Date of publication of application: **18.12.2002**
(21) Application number: 02012559.7
(22) Date of filing: 05.06.2002
(51) Int. Cl.: G05B 19/02

(54) **Ladder circuit diagram display system for elevator**

(30) Priority: 06.06.2001 JP 2001171284
(71) Applicant: Mitsubishi Electric Building Techno-Service Co., Ltd., Tokyo 100-0004 (JP)
(72) Inventor: Furuya, Shiro, 2-chome, Chiyoda-ku, Tokyo 100-0004 (JP); Shiozaki, Hideki, 2-chome, Chiyoda-ku, Tokyo 100-0004 (JP)
(74) Representative: Sajda, Wolf E., Dipl.-Phys.

(57) **Abstract**

Disclosed is a ladder circuit diagram display system for an elevator, which automatically displays a ladder circuit diagram upon a failure on the elevator, to investigate a failure cause quickly and easily. The system has a maintenance computer (2) which reads, from an elevator control panel (1), trace data constituting a ladder circuit diagram, and displays a checklist on a screen based on the trace data. Upon selection of a coil on the screen, a circuit diagram file (2d) describing a ladder circuit diagram depiction method, and a contact count table file (2f) describing coil/contact point relationships, are used to depict the ladder circuit diagram of the selected coil with state of the contact point. If the contact point considered as the cause in the depicted ladder circuit diagram is not the actual cause, the computer (2) develops the contact point based on a selection, and depicts the ladder circuit diagram generating the contact point with the contact point state.

## Description

### BACKGROUND OF THE INVENTION

### 1. Field of the Invention

The present invention relates to a ladder circuit diagram display system for an elevator, which uses a ladder circuit diagram to analyze a cause of failure at a time when the failure occurs on the elevator.

### 2. Description of the Related Art

Conventionally, failure analysis performed at a time when a failure occurs in an elevator includes the following procedure: first, the nature of the failure is confirmed, then a search/selection is performed for a ladder circuit diagram which is deemed necessary. After that, data of information of a contact point is inputted, and information of a corresponding contact point portion is applied in the diagram and displayed.

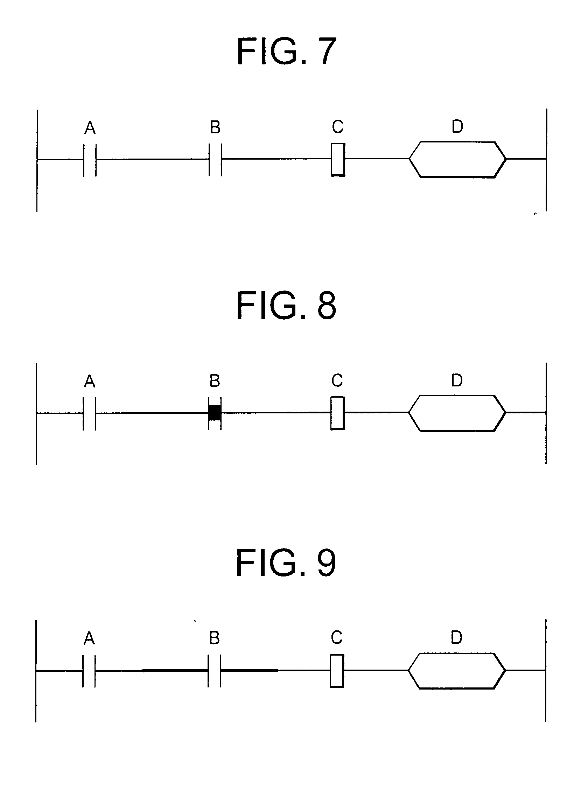

Fig. 7 illustrates an example of a standard ladder circuit diagram. The search/selection is made with respect to a plurality of ladder circuit diagrams at the time when the failure occurs on the elevator. In Fig. 7, A and B indicate MAKE contact points which become ON with machine language code information FFH stored in a program for performing a ladder circuit calculation. C indicates a BREAK contact point which becomes ON with code information 00H. D is a coil which becomes ON with code information FFH.

Further, in Fig. 8, with respect to the selected ladder circuit diagram, the data of the contact point information is inputted, the information of the corresponding contact point is determined as to the ON/OFF state, and the ON portion (contact point B) is filled in.

Similarly, in Fig. 9, the data of the contact point information is inputted, then the information of the corresponding contact point is determined as to the ON/OFF state, and lines on both ends of the ON contact point are emphasized in bold.

However, in accordance with the above-mentioned conventional method, in order to confirm the ladder circuit diagram it is necessary to search/select a number of ladder circuit diagrams. Thus, time and trouble are required before the failure is analyzed.

Further, the method of displaying the contact point information in the ladder circuit diagram consists of filling in the ON contact point portion or emphasizing the lines in bold to indicate the ON/OF state. However, if the circuit is complicated, the bold lines are displayed in many places, and it becomes difficult to understand which line the circuit is conducting through. Thus, there was a problem in that time and trouble are required before the failure is analyzed.

### SUMMARY OF THE INVENTION

The present invention has been made in light of the above-mentioned problems, and therefore has an object to provide a ladder circuit diagram display system capable of causing automatic displaying of the ladder circuit diagram at a time when an failure occurs on the elevator, to ascertained the cause of the failure quickly and easily.

A ladder circuit diagram display system for an elevator according to the present invention includes:
an elevator control panel for operating/controlling an elevator; and
a maintenance computer connected to the elevator control panel via a communications cable for reading out from the elevator control panel trace data of coils and contact points which constitute a ladder circuit diagram, to investigate a cause of a failure,
wherein the maintenance computer includes:
a current-state-confirmation unit for displaying on a screen an automatic-operation-obstruction-cause-signal checklist in which are written current states of the coils, based on the trace data from the time when the failure occurred;
a ladder display unit including:
   a circuit diagram file in which are written contact point categorizations, contact point and coil names and a method of depicting the contact point states;
   a contact count table file in which are written relationships between the coils and the contact points; and
   depicting the ladder circuit diagram of the selected coil name along with the state of the contact point, based on a selection of a given coil name from coil names displayed on the screen by the current-state-confirmation unit using the files; and
a screen developing unit for, if, in the depicted ladder circuit diagram, the contact point being considered as the cause of the failure is not the actual cause of the failure, performing screen development with respect to the contact point based on the selection, and depicting/controlling the ladder circuit diagram generating the contact point, together with the state of the contact point.

### BRIEF DESCRIPTION OF THE DRAWINGS

In the accompanying drawings:
Fig. 1 is an overall construction diagram of a ladder circuit diagram display system for an elevator according to the present invention;
Fig. 2 is a block diagram illustrating a construction inside an elevator control panel shown in Fig. 1;
Fig. 3 is a functional block diagram illustrating a program construction and a file construction provided inside a maintenance computer shown in Fig. 1;
Fig. 4 is a flow chart explaining a concept of investigation of a cause of a failure performed by a ladder circuit diagram display system for an elevator according to the present invention;
Fig. 5 is a flow chart explaining operations of the investigation of the cause of the failure performed by the ladder circuit diagram display system for an elevator according to the present invention;
Figs. 6A to 6C are ladder circuit diagrams depicted by the operations in the investigation of the cause of the failure performed by the ladder circuit diagram display system for an elevator according to the present invention;
Fig. 7 is a diagram showing an example of a standard ladder circuit diagram;
Fig. 8 is a diagram showing an example of a ladder circuit diagram in which an ON portion (a contact point B) is indicated by being filled in; and
Fig. 9 is a diagram showing an example of a ladder circuit diagram in which lines on both sides of an ON contact point are indicated by being emphasized in bold.

### DETAILED DESCRIPTION OF THE PREFERRED EMBODIMENTS

Hereinafter, explanation is made of an embodiment of the present invention with reference to the drawings.

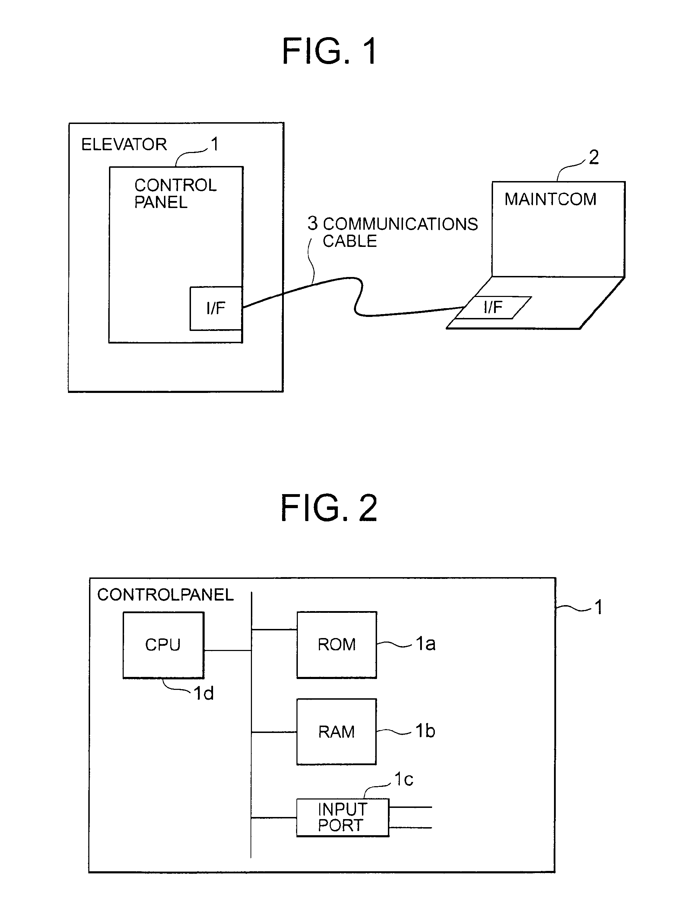

Fig. 1 is an overall constructional diagram showing a ladder circuit diagram display system according to the present invention. As shown in Fig. 1, an elevator control panel 1 and a maintenance computer 2 each have an interface I/F, and are connected via a communications cable 3 so as to be capable of data communications. Note that the maintenance computer 2 is abbreviated as the "maintcom".

Fig. 2 is a block diagram showing a construction inside the elevator control panel.

As shown in Fig. 2, the elevator control panel 1 has: a ROM 1a that has stored a processing program and fixed data for controlling operation of the elevator; a RAM 1b for temporarily storing a state of each coil and contact point for performing ladder calculations, processing data such as the results of the ladder calculations, and input data; an input port 1c for inputting data of external contact points such as a door switch and a safety switch; and a CPU 1d for performing various controls. The RAM 1b temporarily stores trace data of the coils and contact points which constitute the ladder circuit diagram and cause an obstruction to automatic operation at the time when the failure occurs on the elevator.

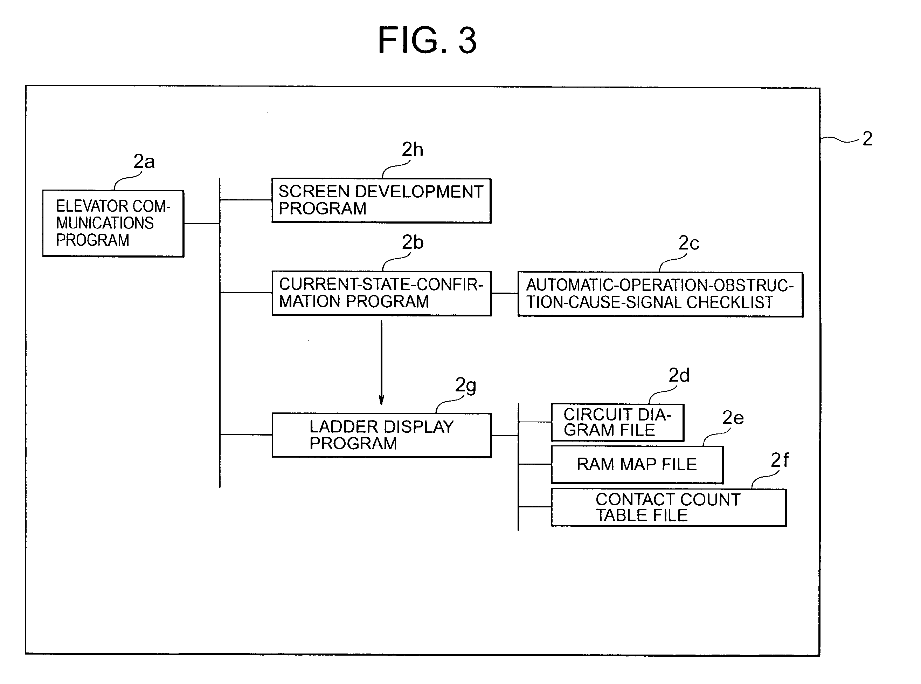

Further, Fig. 3 is a functional bock diagram illustrating a program construction and a file construction provided to the maintenance computer 2. As shown in Fig. 3, the maintenance computer 2 has: an elevator communications program 2a which functions as communications means; a current-state-confirmation program 2b which functions as current-state-confirmation means for displaying on a screen an automatic-operation-obstruction-cause-signal checklist 2c in which the state of the current state coil is described based on the trace data at the time when the failure occurs; a circuit diagram file 2d in which are described categorizations of the contact points which constitute the ladder circuit diagram, names of the contact points/coils, and a method of depicting the connection state; a RAM map file 2e in which is written an address in the RAM 1b of the elevator control panel 1 where the states of the coils and contact points are stored; and a contact count table file 2f describing the relationships among the coils and the contact points. The maintenance computer 2 further has: a ladder display program 2g which functions as ladder display means which depicts the ladder circuit diagram of the corresponding coil name together with the state of the contact point, based on a selection of the coil name on the screen displayed by means of the current-state-confirmation program 2b using the above-mentioned files; and also a screen development program 2h which functions as screen developing means for, if the contact point that is indicated as the cause of the failure in the depicted ladder circuit diagram is not the actual cause of the failure, developing the screen based on the selection of the contact point, and controlling/depicting the ladder circuit diagram generating the contact point together with the state of the contact point.

Here, the elevator communications program 2a is a program for performing data communications with the elevator control panel 1, and data communications among each program in the maintenance computer 2. The current-state-confirmation program 2b is a program for reading out, via the elevator communications program 2a, a state indicated by a current state signal from the RAM 1 b inside the elevator control panel 1 to detect the state of the failure of the coil. As shown in Table 1, the program 2b creates and displays the automatic-operation-obstruction-cause-signal checklist 2c in which are written the coil names related to the cause obstructing the automatic operation of the elevator and Japanese names of the coils, a storage addresses in the RAM 1 b in the elevator control panel 1, and the states.

**Table 1:**

| Automatic-operation-obstruction-cause-signal checklist | | | |
|---|---|---|---|
| Coil name | Japanese name | RAM address | State |
| SW_A | Safety circuit operating | 8000 | 00H |
| SW_E | Cannot re-start | 8001 | 00H |
| SW_F | Door open | 8002 | FFH |

Further, the ladder display program 2g is a program which uses the circuit diagram file 2d, the RAM map file 2e and the contact count table file 2f to display a ladder circuit diagram and the states of the contact points/coils of the elevator. The circuit diagram file 2d is a data file for depicting the ladder circuit diagram, in which are described the categorizations of the contact points constituting the circuit diagram, the contact point and coil names and the method of depicting the contact states. Further, a RAM map file 10 is a file in which are written an elevator RAM address where the states of the displayed contact points or of the coils (OOH/FFH) are stored, as shown in Table 2. Table 2 describes correspondences between the coil names and the storage addresses in the RAM 1 b of the elevator control panel 1.

**Table 2:**

| RAM map file | |
|---|---|
| Coil name | RAM address |
| SW_A | 8000 |
| SW_B | 8001 |
| SW_C | 8002 |

Further, a contact count table file 2f is a file describing correspondences between the coils and the contact points, as shown in Table 3. For example, it is shown that a coil "SW_A" related to a coil "SX_B" is on a sheet number "010" in the circuit diagram file.

**Table 3:**

| Contact count table file | | |
|---|---|---|
| Name of contact point | Sheet number | Coil name |
| SX_B | 010 | SW_A |
| SX_H | 020 | SY_B |
| SW_E | 010 | SW_A |
| SW_C | 020 | SY_B |
| SN_J | 030 | SY_C |

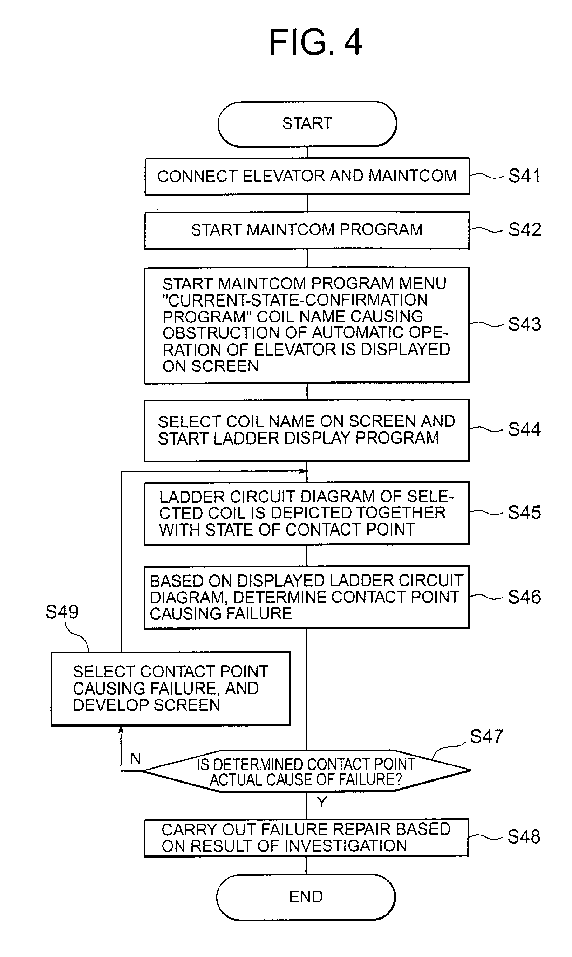

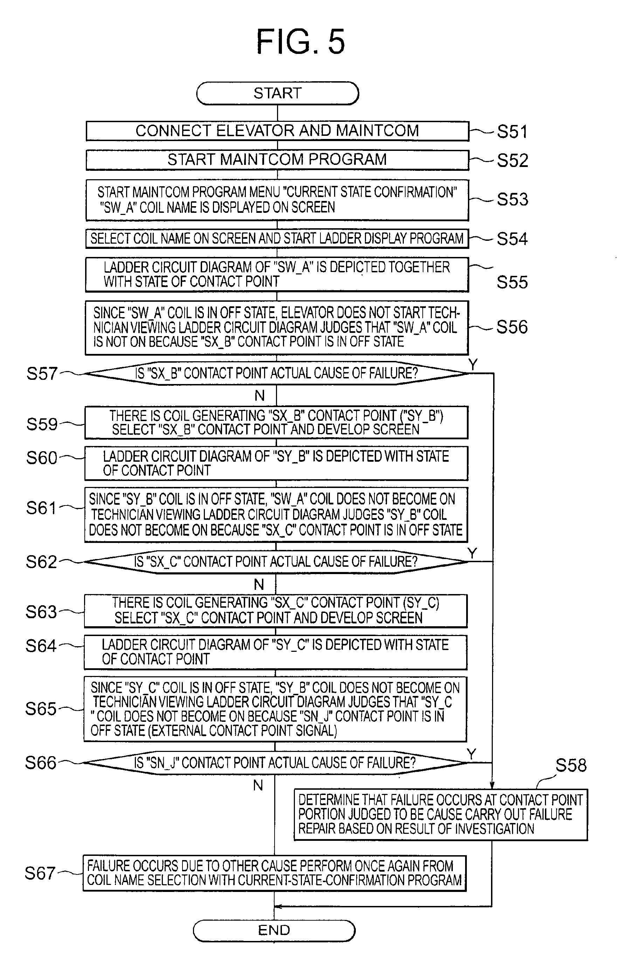

Next, explanation will be made regarding an operation to investigate the cause of the failure performed by the ladder circuit diagram display system for an elevator according to the present invention having the above-mentioned construction, making reference to flow charts shown in Fig. 4 and Fig. 5.

Fig. 4 is a flow chart illustrating concepts in accordance with the investigation of the cause of the failure.

First, the maintenance computer 2 according to the present invention is connected to the elevator control panel 1 via a communications cable 3, as shown in Fig. 1 (Step S41), and the maintenance computer 2 is booted (Step S42). This starts the data communication with the elevator control panel 1 based on the elevator communications program 2a, and the trace data which is from the time when the failure occurred and is stored in the RAM 1b in the elevator control panel 1 is read out.

By starting the current-state-confirmation program 2b, the maintenance computer 2 creates the automatic-operation-obstruction-cause-signal checklist 2c based on the trace data which has been read out, and displays on the screen the coil name causing the obstruction of the automatic operation of the elevator shown in Table 1 (Step S43). Here, by selecting an arbitrary coil the ladder display program 2g is started, and by using the circuit diagram file 2d, the RAM map file 2e and the contact count table file 2f, the ladder circuit diagram of the selected coil is depicted together with the state of the contact point (Steps S44 and S45).

In other words, when the coil name on the screen is selected, the ladder display program 2g is started, and the started ladder display program 2g uses a circuit diagram file 9 and a contact count table file 2f to depict the ladder circuit diagram. At that time, the ladder display program 2g uses the RAM map file 10 to make a request to the elevator communications program 2a for the contact point information that is necessary for the elevator control panel 1, and the elevator communications program 2a reads out the elevator contact point information from the RAM 1b of the elevator control panel 1 to transfer the information to the ladder display program 2g.

Next, the contact point causing the failure is determined based on the displayed ladder circuit diagram (Step S46). Then it is determined whether or not the determined contact point is the actual cause of the failure. If it is the cause of the failure, then a failure repair is carried out based on investigation results (Steps S47 and S48). On the other hand, if the contact point is not the actual cause of the failure, the contact point considered to be the cause of the failure is selected once again, whereby the screen development program 2h is started, the screen development is carried out and Step S45 and the subsequent steps are repeated to depict the ladder circuit diagram that is generating that contact point, together with the state of the contact point (from Step S46 to S49 to S45).

With the above-mentioned operations, the ladder circuit diagram can be automatically displayed at the time when the failure occurs on the elevator, and the cause of the failure can be ascertained quickly and easily.

Next, explanation will be made of specific operations of the failure investigation in a case where, for example, an external contact point "SN_J" is the cause of the failure occurrence, based on Fig. 5.

First, the maintenance computer 2 according to the present invention is connected to the elevator control panel 1 via the communications cable 3 (Step S51) as shown in Fig. 1, and the maintenance computer 2 is booted (Step S52). As a result, the data communications with the elevator control panel 1 are started, and the trace data from when the failure occurred being stored in the RAM 1 b of the elevator control panel 1 is read out.

The maintenance computer 2 starts the current-state-confirmation program 2a to thereby create the automatic-operation-obstruction-cause-signal checklist 2c based on the trace data that has been read out, and displays on the screen the name of the coil shown in Table 1 that is the cause of the obstruction of the automatic operation of the elevator (Step S53). That is, the maintenance computer 2 starts the current-state-confirmation program 2a, to thereby display on the screen the coil name, for example "SW_A", of the coil causing the obstruction of the automatic operation of the elevator.

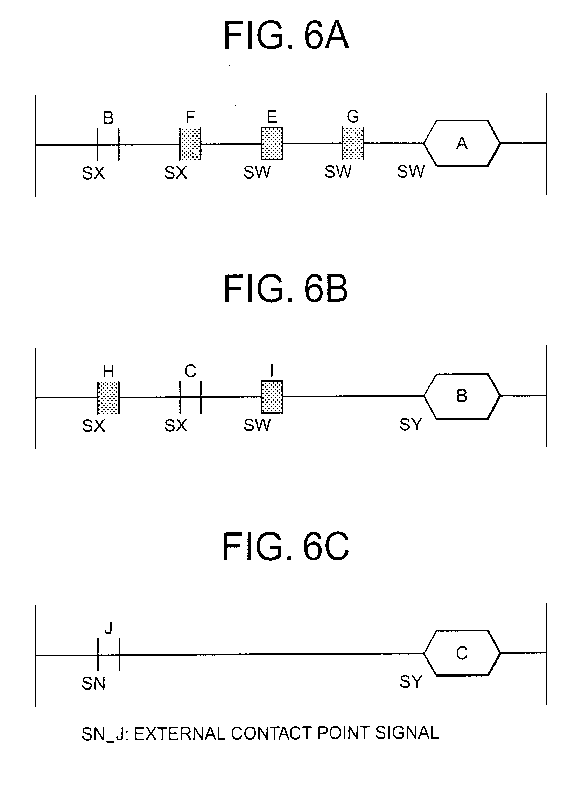

Here, when the coil name on the screen is selected, the ladder display program 2g is started (Step S54), and the ladder circuit diagram of "SW_A" is depicted together with the state of the contact point (Step S55). Fig. 6A shows the ladder circuit diagram that is depicted. The elevator does not start because the "SW_A" coil is OFF in the ladder circuit diagram shown in Fig. 6A. A technician viewing the ladder circuit diagram can judge that the reason why the "SW_A" coil is not ON is because "SX_F", "SW_E" and "SW_G" contact points are in ON states, making an "SX_B" contact point be in the OFF state. (Step S56) At this time, the ladder display program 2g displays the ON/OFF states of these contact points according to color-coded classifications to enable the judgment to be made quickly.

Therefore, a determination needs to be made as to whether or not the "SX_B" contact point is the actual cause of the failure. If the "SX_B" contact point is the actual cause of the failure, then it is determined that that contact point portion is generating the failure, and the failure repair is carried out based on the result of this investigation (from Step S57 to S58). On the other hand, if the "SX_B" contact point is not the actual cause of the failure, then, since there is a coil generating the "SX_B" contact point, the "SX_B" contact point is selected, and the screen development program 2h is started and the screen development is carried out (Step S59). As a result, the ladder circuit diagram of an "SY_B" coil is depicted together with its state as shown in Fig. 6B (Step S60).

As shown in Fig. 6B, since the "SY_B" coil is OFF, the "SW_A" is not ON. Thus, the technician viewing the ladder circuit diagram judges that the reason why the "SY_B" coil is not ON is because "SX_H" and "SW_I" contact points are in ON states, making an "SX_C" contact point is in the OFF state. (Step S61)

Therefore, a determination needs to be made as to whether or not the "SX_C" contact point is the actual cause of the failure. If the "SX_C" contact point is the actual cause of the failure, then it is determined that that contact point portion is generating the failure, and the failure repair is carried out based on the result of this investigation (from Step S57 to S58). On the other hand, if the "SX_C" contact point is not the actual cause of the failure, then, since there is a coil generating the "SX_C" contact point, the "SX_C" contact point is selected, and the screen development program 2h is started and the screen development is carried out (Step S63). As a result, the ladder circuit diagram of an "SY_C" coil is depicted together with its state as shown in Fig. 6C (Step S64).

As shown in Fig. 6C, since the "SY_C" coil is OFF, the "SY_B" is not ON. Thus, the technician viewing the ladder circuit diagram judges that the reason why the "SY_C" coil is not ON is because an "SN_J" contact point is in the OFF state (Step S65).

Therefore, a determination needs to be made as to whether or not the "SN_J" contact point is the actual cause of the failure. If the "SN_J" contact point is the actual cause of failure, then it is determined that that contact point portion is generating the failure, and the failure repair is carried out based on the result of this investigation (from Step S66 to S58). On the other hand, if the "SN_J" contact point is not the actual cause of the failure, then it is determined that the failure has occurred due to another cause, and the procedure is performed once again (Step S67) from the selection of the coil name with the current-state-confirmation program.

According to the above, the ladder circuit diagram is automatically displayed at the time when the failure of the elevator occurs, whereby the cause of the failure can be ascertained quickly and easily.

Note that, in accordance with the above-mentioned embodiment, if the trace data is periodically saved in the RAM 1b of the elevator control panel 1, the current-state-confirmation program 2b can retrieve past trace data to use in the investigation of the cause of the failure, which helps in the investigation of the cause of the failure.

Further, if there is a different circuit diagram file per elevator type for the circuit diagram file 2d, the ladder display program 2g can depict the ladder circuit diagram in accordance with the elevator type, which helps in the investigation of the cause of the failure according to the elevator type.

Further, if an actual circuit diagram of the base of the circuit board is stored as a PDF file in the circuit diagram file 2d, the ladder display program 2g can use the PDF file to display the actual position where the contact point causing the failure is located on the base of the circuit board, which helps in the investigate of the cause of the failure.

As described above, in accordance with the present invention, the ladder circuit diagram display system for an elevator, including: the elevator control panel for operating/controlling the elevator; and the maintenance computer connected to the elevator control panel via the communications cable for reading out from the elevator control the panel trace data of coils and contact points which constitute the ladder circuit diagram, to investigate the cause of the failure, wherein the maintenance computer includes: the current-state-confirmation-means for displaying on the screen the automatic-operation-obstruction-cause-signal checklist in which are written current states of the coils, based on the trace data from the time when the failure occurred; the ladder display means including: the circuit diagram file in which are written contact point categorizations, the contact point and coil names and the method of depicting the contact point states; the contact count table file in which are written relationships between the coils and the contact points; and depicting the ladder circuit diagram of the selected coil name along with the state of the contact point, based on the selection of a given coil name from the coil names displayed on the screen by the current-state-confirmation means using the files; and the screen developing means for, if, in the depicted ladder circuit diagram, the contact point being considered as the cause of the failure is not the actual cause of the failure, performing screen development with respect to the contact point based on the selection, and depicting/controlling the ladder circuit diagram generating the contact point, together with the state of the contact point. Consequently, the ladder circuit diagram can be displayed automatically at the time when the failure occurs on the elevator, to ascertain the cause of the failure quickly and easily.

## Claims

1. A ladder circuit diagram display system for an elevator, comprising:
- an elevator control panel (1) for operating/controlling an elevator; and
- a maintenance computer (2) connected to the elevator control panel (1) via a communication cable (3) for reading out from the elevator control panel (1) trace data of coils and contact points which constitute a ladder circuit diagram, to investigate a cause of a failure,
wherein the maintenance computer (2) comprises:
- current-state-confirmation means (2b) for displaying on a screen an automatic-operation-obstruction-cause-signal checklist in which are written current states of the coils, based on the trace data from the time when the failure occurred;
- ladder display means (2g) including:
-- a circuit diagram file (2d) in which are written contact point categorizations, contact point and coil names and a method of detecting the contact point states;
-- a contact count table file (2f) in which are written relationships between the coils and the contact points; and
-- depicting the ladder circuit diagram of the selected coil name along with the state of the contact point, based on a selection of a given coil name from coil names displayed on the screen by the current-state-confirmation means (2b) using the files; and
- screen developing means (2h) for, if, in the depicted ladder circuit diagram, the contact point being considered as the cause of the failure is not the actual cause of the failure, performing screen development with respect to the contact point based on the selection, and depicting/controiiing the ladder circuit diagram generating the contact point, together with the state of the contact point.

2. The display system according to claim 1,
wherein the ladder display means (2g) display open/closed states of the contact points according to color-coded classifications.

3. The display system according to claim 1 or 2,
wherein the elevator control panel (1) periodically saves the trace data; and wherein past trace data are retrieved by the current-state-confirmation means (2b) and used in the investigation of the cause of the failure.

4. The display system according to any of claims 1 to 3,
wherein the ladder display means (2g) have a different circuit diagram file (2d) per elevator type, and depict the ladder circuit diagram according to the elevator type.

5. The display system according to any of claims 1 to 4,
wherein the ladder display means (2g) store, as a PDF file, an actual diagram of the circuit on a circuit board, and display an actual position where the contact point causing the problem is located on the circuit board.
